# EUROPEAN PATENT APPLICATION

(11) **EP 4 682 398 A1**
(43) Date of publication of application: **21.01.2026**
(21) Application number: 25189749.2
(22) Date of filing: 15.07.2025
(51) Int. Cl.: F16F 1/02, F16F 9/348

(54) **SPRING WITH TAPERED ARMS FOR SHOCK ABSORBER**

(30) Priority: 17.07.2024 US 202418775489
(71) Applicant: Advanced Suspension Technology LLC, Northville, MI 48168 (US)
(72) Inventor: VAN DE PLAS, Jelle, Northville, Michigan, 48168 (US)
(74) Representative: Pritzlaff, Stefanie Lydia

(57) **Abstract**

A shock absorber for a vehicle includes a pressure tube defining a fluid chamber. A piston is slidably positioned within the fluid chamber and defines a first working chamber and a second working chamber. The piston includes a passage extending therethrough. The shock absorber further includes a valve assembly adapted to selectively open and close the passage. The valve assembly includes a spring and a disc. The spring includes a ring defining a center aperture and a plurality of arms extending around the ring. Each of the plurality of arms includes a radially extending leg, a base end positioned proximate to the leg, and a distal end. A first dimension of the base end is greater than a second dimension of the distal end. The disc is at least partially positioned between the piston and the spring.

## Description

### FIELD

The present disclosure relates hydraulic dampers and shock absorbers. Specifically, the present disclosure relates to a shock absorber including a valve assembly having a spring with tapered arms.

### BACKGROUND

The statements in this section merely provide background information related to the present disclosure and may not constitute prior art.

Shock absorbers are typically used in conjunction with automotive suspension systems or other suspension systems to absorb unwanted vibrations that occur during movement of the suspension system. In order to absorb these unwanted vibrations, automotive shock absorbers are generally connected between the sprung (body) and the unsprung (suspension/drivetrain) masses of the vehicle.

The most common type of shock absorbers for automobiles are mono-tube and dual-tube shock absorbers. In the mono-tube shock absorber, a piston is located within a fluid chamber defined by a pressure tube and is connected to the sprung mass of the vehicle through a piston rod. The pressure tube is connected to the unsprung mass of the vehicle. The piston divides the fluid chamber of the pressure tube into a first working chamber and a second working chamber. The piston includes compression valving that limits the flow of hydraulic fluid from the second working chamber to the first working chamber during a compression stroke. The piston also includes rebound valving that limits the flow of hydraulic fluid from the first working chamber to the second working chamber during a rebound or extension stroke. Because the compression valving and the rebound valving have the ability to limit the flow of hydraulic fluid, the shock absorber is able to produce a damping force that counteracts oscillations/vibrations, which would otherwise be transmitted from the unsprung mass to the sprung mass.

Together, the compression and rebound valving assemblies for the shock absorber have the function of controlling fluid flow between the first and second working chambers of the shock absorber. By controlling the fluid flow between the two working chambers, a pressure drop is built up between the two working chambers and this contributes to the damping forces of the shock absorber. The compression and rebound valving and the check valve assemblies can be used to tune the damping forces to control ride and handling as well as noise, vibration, and harshness.

Generally, compression and rebound valving assemblies include a plurality of discs and a spring (e.g., an arm spring). During operation of the shock absorber, the spring is cycled between a first position and a second position. Arms of the spring may exhibit cyclic fatigue and fracture or break, thus inhibiting operation of the compression and rebound valving assemblies. Thus, the continued development of compression and rebound valving assemblies has been directed to achieving a spring having improved durability characteristics.

### SUMMARY

This section provides a general summary of the disclosure, and is not a comprehensive disclosure of its full scope or all of its features.

The present disclosure provides the art with a shock absorber for a vehicle including a pressure tube defining a fluid chamber. A piston is slidably positioned within the fluid chamber and defines a first working chamber and a second working chamber. The piston includes a passage extending therethrough. The shock absorber further includes a valve assembly adapted to selectively open and close the passage. The valve assembly includes a spring and a disc. The spring includes a ring defining a center aperture and a plurality of arms extending around the ring. Each of the plurality of arms includes a radially extending leg, a base end positioned proximate to the leg, and a distal end extending circumferentially outward from the base end. A first dimension of the base end is greater than a second dimension of the distal end. The disc is at least partially positioned between the piston and the spring.

The present disclosure further provides the art with a shock absorber for a vehicle including a pressure tube defining a fluid chamber. A piston is slidably positioned within the fluid chamber and defines a first working chamber and a second working chamber. The piston includes a passage extending therethrough. The shock absorber further includes a valve assembly adapted to selectively open and close the passage. The valve assembly includes a spring and a disc. The spring includes a ring defining a center aperture and a plurality of arms extending around the ring. Each of the plurality of arms includes a radially extending leg, a base end positioned proximate to the leg, and a distal end extending circumferentially outward from the base end. The disc is at least partially positioned between the piston and the spring. The spring is movable between a first position and a second position. In the first position, each of the plurality of arms is bent at a first angle with respect to a plane of the ring. In the second position, each of the plurality of arms is bent at a second angle with respect to the plane of the ring. A first dimension of the base end is greater than a second dimension of the distal end.

The present disclosure further provides the art with a shock absorber for a vehicle including a pressure tube defining a fluid chamber. A piston is slidably positioned within the fluid chamber and defines a first working chamber and a second working chamber. The piston includes a first surface and a second surface opposite the first surface. The piston further includes passage extending therethrough between the first surface and the second surface. The shock absorber further includes a compression valve assembly adapted to selectively open and close the passage. The compression valve assembly is positioned proximate to the first surface of the piston. The compression valve assembly includes a first disc and a first spring. The shock absorber further includes a rebound valve assembly adapted to selectively open and close the passage. The rebound valve assembly is positioned proximate to the second surface of the piston. The rebound valve assembly includes a second disc and a second spring. Each of the first spring and the second spring includes a ring defining a center aperture and a plurality of arms extending around the ring. Each of the plurality of arms includes a radially extending leg, a base end positioned proximate to the leg, and a distal end extending circumferentially outward from the base end. A first dimension of the base end is greater than a second dimension of the distal end.

Further areas of applicability and advantages will become apparent from the description provided herein. It should be understood that the description and specific examples are intended for purposes of illustration only and are not intended to limit the scope of the present disclosure.

### BRIEF DESCRIPTION OF THE DRAWINGS

The drawings described herein are for illustrative purposes only of selected embodiments and not all possible implementations, and are not intended to limit the scope of the present disclosure.
Figure 1 is an illustration of an exemplary vehicle equipped with a shock absorber in accordance with the teachings of the present disclosure;
Figure 2 is a fragmentary side view of a shock absorber constructed in accordance with the teachings of the present disclosure;
Figure 3A is an exploded perspective view depicting a piston body, a compression bleed valve assembly, a compression blowoff valve assembly, and the piston rod of the shock absorber illustrated in Figure 2;
Figure 3B is an exploded perspective view depicting a rebound bleed valve assembly, a rebound blowoff valve assembly, and a retaining nut of the shock absorber illustrated in Figure 2;
Figure 4 is a cross-sectional view of the shock absorber taken from line 4-4 in Figure 3A;
Figure 5 is a cross-sectional view of the shock absorber taken from line 5-5 in Figure 3A;
Figure 6A is a perspective view of an exemplary spring of the shock absorber in accordance with the teachings of the present disclosure;
Figure 6B is a side view of the spring illustrated in Figure 6A in a first position;
Figure 6C is a side view of the spring illustrated in Figure 6A in a second position;
Figure 7 is a schematic of the spring of Figures 6A-6C in accordance with the teachings of the present disclosure;
Figure 8A is a perspective view of the first side of an exemplary piston body in accordance with the teachings of the present disclosure;
Figure 8B is a perspective view of the first side of an exemplary piston body in accordance with the teachings of the present disclosure;
Figure 9 is an exploded perspective view depicting a piston body, compression bleed valve assembly, and compression blowoff valve assembly, of another shock absorber in accordance with the teachings of the present disclosure; and
Figure 10 is a cross-sectional view of the shock absorber taken from line 10-10 in Figure 9.

Corresponding reference numerals indicate corresponding parts throughout the several views of the drawings.

### DETAILED DESCRIPTION

The following description is merely exemplary in nature and is not intended to limit the present disclosure, application, or uses.

Example embodiments are provided so that this disclosure will be thorough, and will fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments, well-known processes, well-known device structures, and well-known technologies are not described in detail.

The terminology used herein is for the purpose of describing particular example embodiments only and is not intended to be limiting. As used herein, the singular forms "a," "an," and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

When an element or layer is referred to as being "on," "engaged to," "connected to," or "coupled to" another element or layer, it may be directly on, engaged, connected or coupled to the other element or layer, or intervening elements or layers may be present. In contrast, when an element is referred to as being "directly on," "directly engaged to," "directly connected to," or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

Spatially relative terms, such as "inner," "outer," "beneath," "below," "lower," "above," "upper," and the like, may be used herein for ease of description to describe one element or feature's relationship to another element(s) or feature(s) as illustrated in the figures. Spatially relative terms may be intended to encompass different orientations of the device in use or operation in addition to the orientation depicted in the figures. For example, if the device in the figures is turned over, elements described as "below" or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly.

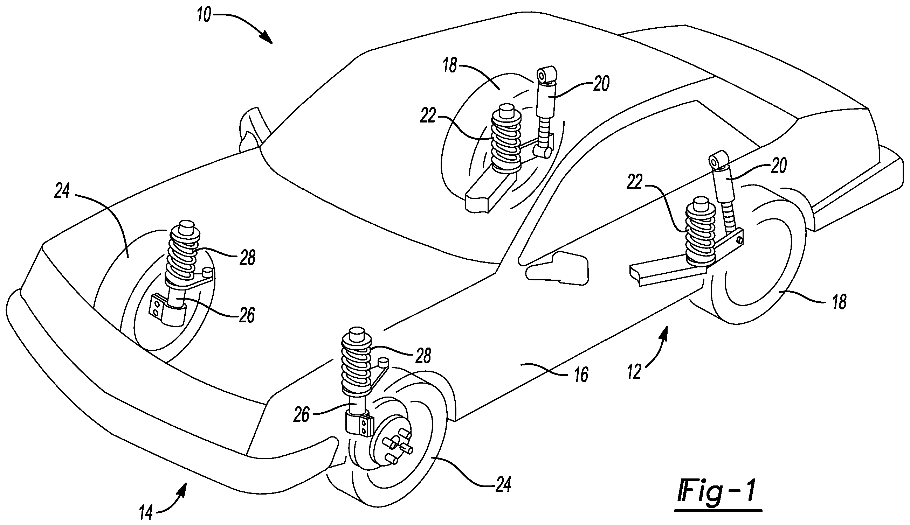

Referring to Figure 1, a vehicle 10 including a rear suspension 12, a front suspension 14, and a body 16 is illustrated. The rear suspension 12 has a rear axle assembly (not shown) adapted to operatively support the vehicle's rear wheels 18. The rear axle assembly is operatively connected to the body 16 by a pair of hydraulic dampers 20 and a pair of helical coil springs 22. Similarly, the front suspension 14 includes a front axle assembly (not shown) to operatively support the vehicle's front wheels 24. The front axle assembly is operatively connected to the body 16 by a second pair of hydraulic dampers 26 and by a pair of helical coil springs 28. The hydraulic dampers 20 and 26 serve to dampen the relative motion of the unsprung portion (i.e., the front and rear suspensions 14 and 12, respectively) and the sprung portion (i.e., the body 16) of the vehicle 10. In other words, the hydraulic dampers 20 and 26 are adapted to dampen movement of the suspension systems 14, 12 relative to the body 16.

While the vehicle 10 has been depicted as a passenger car having front and rear axle assemblies, the hydraulic dampers 20 and 26 may be used with other types of vehicles or machinery, or in other types of applications such as vehicles incorporating independent front and/or independent rear suspension systems. Hydraulic dampers 20 and 26 may include shock absorbers, MacPherson struts, semi-active (e.g., a Continuously Variable Semi-Active (CVSA) dampers, and active suspension devices, for example. It should also be appreciated that the scope of the subject disclosure is intended to include shock absorber systems for stand-alone shock absorbers 20 and coil-over shock absorbers 26.

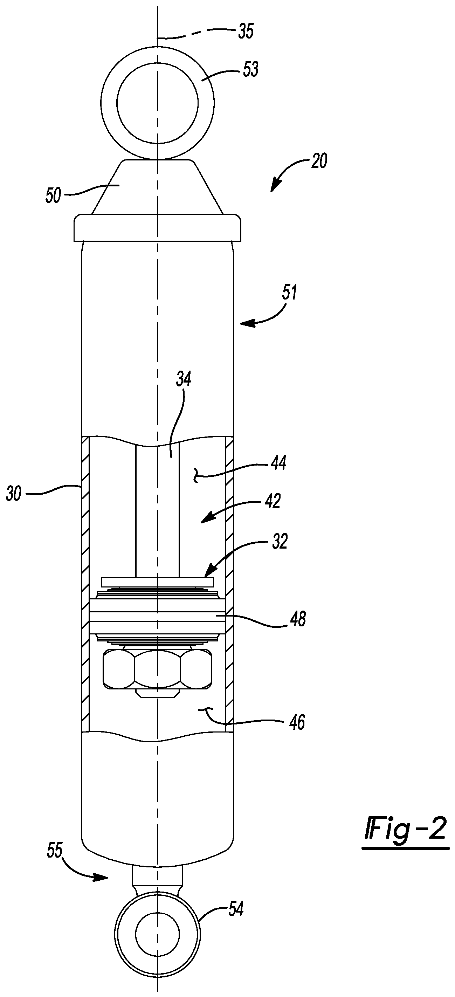

With additional reference to Figure 2, the hydraulic damper 20 (hereafter the "shock absorber 20") is shown in greater detail. While Figure 2 shows only the shock absorber 20, it is to be understood that the hydraulic damper 26 (hereafter the "shock absorber 26") also includes the piston assembly described below for the shock absorber 20. The shock absorber 26 only differs from the shock absorber 20 in the way in which it is adapted to be connected to the sprung and unsprung portions of the vehicle 10 and the mounting location of the coil spring 28 relative to the shock absorber 26.

The shock absorber 20 comprises a pressure tube 30, a piston assembly 32, and a piston rod 34. The pressure tube 30 and the piston rod 34 extend co-axially along a longitudinal axis 35. The pressure tube 30 defines an internal cavity 42. The piston assembly 32 is slidably disposed within the internal cavity 42 of the pressure tube 30 and divides the internal cavity 42 into a first working chamber 44 and a second working chamber 46. A seal 48 is disposed between the piston assembly 32 and the pressure tube 30 to permit sliding movement of the piston assembly 32 with respect to the pressure tube 30 without generating undue frictional forces as well as sealing the first working chamber 44 from the second working chamber 46.

The piston rod 34 is attached to the piston assembly 32 and extends through the first working chamber 44 and through an upper end cap 50 which closes a first end 51 of the pressure tube 30. An attachment end 53 of the piston rod 34 opposite to the piston assembly 32 is connected to the body 16 of the vehicle 10 (i.e., the sprung portion of vehicle 10). The pressure tube 30 is filled with a hydraulic fluid and includes an attachment fitting 54 at a second end 55 of the pressure tube 30 that is connected to the unsprung portion of the suspension 12 and 14. The first working chamber 44 is thus positioned between the first end 51 of the pressure tube 30 and the piston assembly 32 and the second working chamber 46 is positioned between the second end 55 of the pressure tube 30 and the piston assembly 32. Suspension movements of the vehicle 10 will cause extension/rebound or compression movements of the piston assembly 32 with respect to the pressure tube 30. Valving within the piston assembly 32 controls the movement of hydraulic fluid between the first working chamber 44 and the second working chamber 46 during movement of the piston assembly 32 within the pressure tube 30. It should be appreciated that the shock absorber 20 may be installed in a reverse orientation, where the attachment end 53 of the piston rod 34 is connected to the unsprung portion of the suspension 12 and 14 and the attachment fitting 54 is connected to the body 16 (i.e., the sprung portion of the vehicle 10).

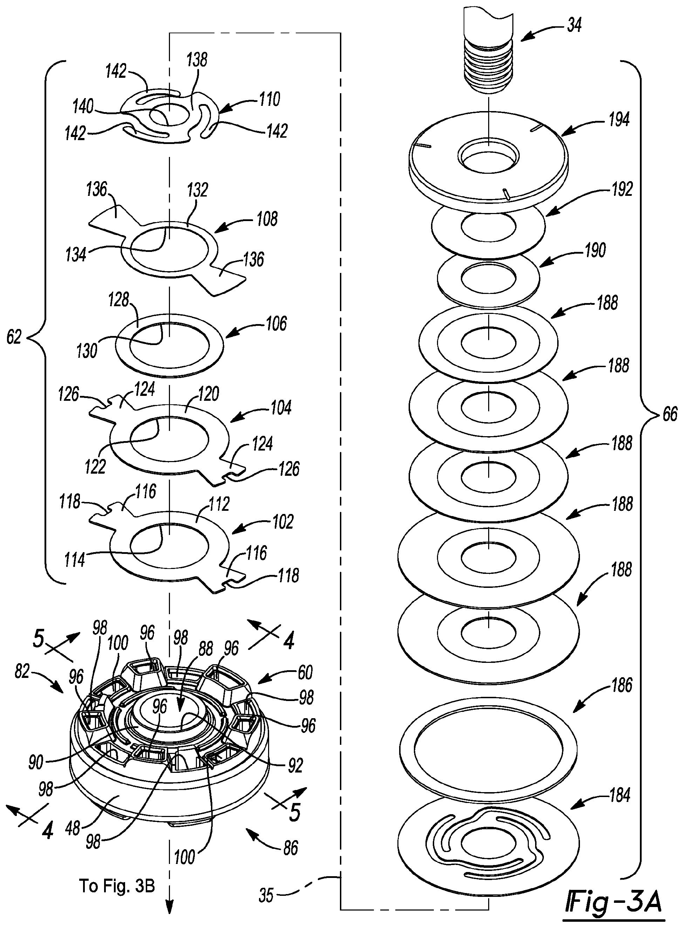

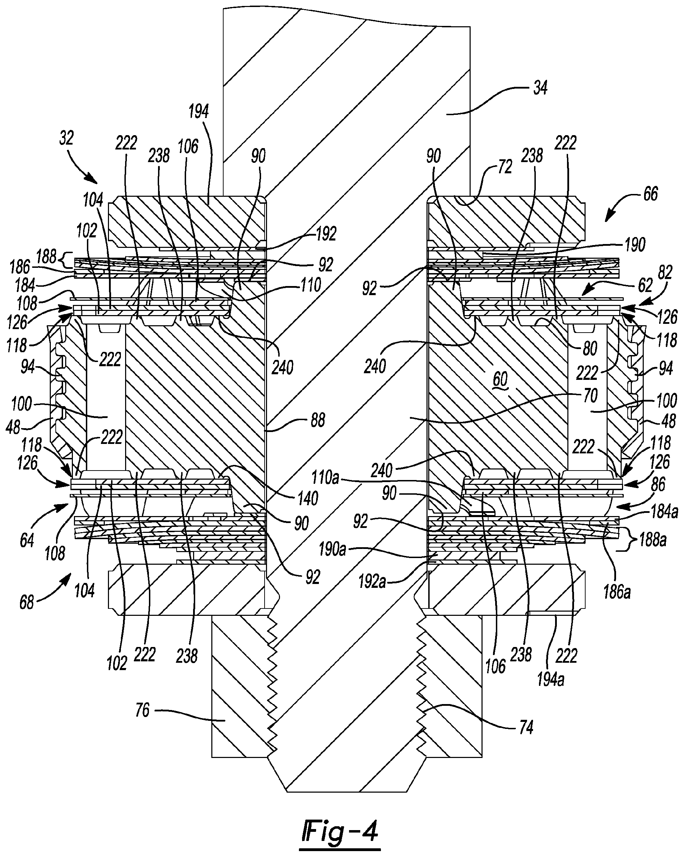

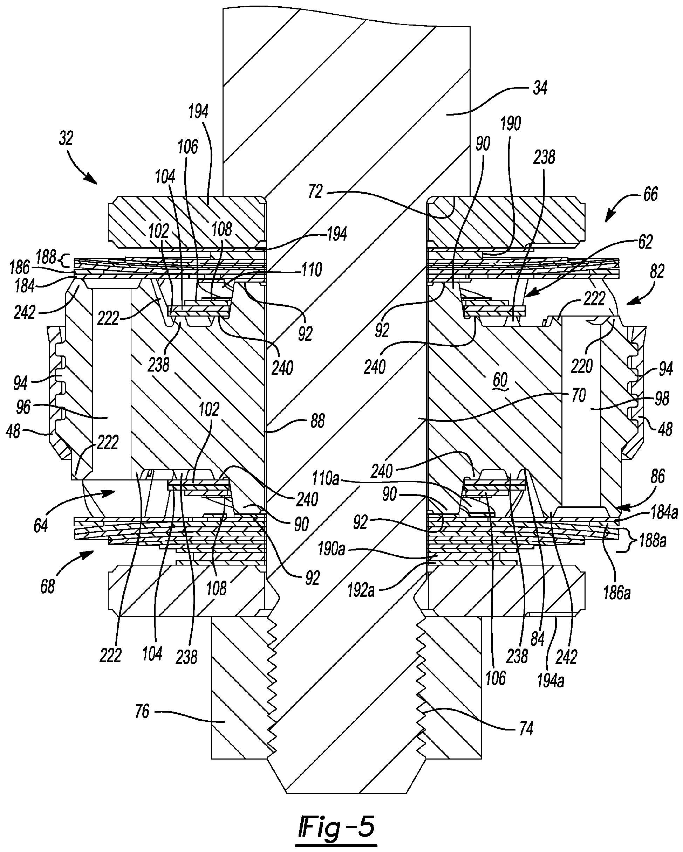

With additional reference to Figures 3A, 3B, 4, and 5, the piston assembly 32 comprises a piston body 60 that is attached to the piston rod 34, a compression bleed valve assembly 62, a rebound bleed valve assembly 64, a compression blowoff valve assembly 66, and a rebound blowoff valve assembly 68. Piston rod 34 includes a reduced diameter section 70 (Figures 4 and 5) located on the end of piston rod 34 that is disposed within pressure tube 30 such that the reduced diameter section 70 forms a shoulder 72 that abuts the piston assembly 32. Piston body 60 is located on reduced diameter section 70 with the compression bleed valve assembly 62 and the compression blowoff valve assembly 66 being located longitudinally between the piston body 60 and the shoulder 72 and with the rebound bleed valve assembly 64 and the rebound blowoff valve assembly 68 being located longitudinally between the piston body 60 and a threaded end 74 of the piston rod 34. A retaining nut 76 cooperates with the threaded end 74 of the piston rod 34 to secure the compression blowoff valve assembly 66, the compression bleed valve assembly 62, the piston body 60, the rebound bleed valve assembly 64, and the rebound blowoff valve assembly 68 to the piston rod 34. The piston body 60 abuts the compression bleed valve assembly 62, which abuts the compression blowoff valve assembly 66, which abuts the shoulder 72 formed on piston rod 34. The piston body 60 also abuts the rebound bleed valve assembly 64, which abuts the rebound blowoff valve assembly 68, which abuts a retaining nut 76. The retaining nut 76 secures the piston body 60, the compression bleed valve assembly 62, the compression blowoff valve assembly 66, the rebound bleed valve assembly 64, and the rebound blowoff valve assembly 68 to the piston rod 34.

With continued reference to Figures 3A, 3B, 4, 5, 8A and 8B, the piston body 60 includes a first surface 80 on a first side 82 of the piston body 60 and a second surface 84 on a second side 86 of the piston body 60. The first surface 80 is opposite and spaced apart from the second surface 84 along the longitudinal axis 35. In some embodiments, the first surface 80 and the second surface 84 may be planar surfaces. The first surface 80 and the first side 82 may face the first working chamber 44. The second surface 84 and the second side 86 may face the second working chamber 46. The piston body 60 includes a center hole 88, through which the piston rod 34 is configured to extend. The piston body 60 further includes hubs 90 surrounding the center hole 88 and extending from the first surface 80 and the second surface 84, respectively. Each hub 90 terminates in an annular end or hub face 92. An outer circumferential portion 94 of the piston body 60 is configured to receive the seal 48. The piston body 60 defines a plurality of compression flow blowoff passages 96, a plurality of rebound flow blowoff passages 98, and a plurality of bleed flow passages 100. The compression flow blowoff passages 96, the rebound flow blowoff passages 98, and the bleed flow passages 100 are passages through which hydraulic fluid may flow. Thus, each of the compression flow blowoff passages 96, the rebound flow blowoff passages 98, and the bleed flow passages 100 may be referred to as a fluid passage.

The compression bleed valve assembly 62 comprises, for example, a first set of valve components, such as a restriction disc 102, an orifice disc 104, a fulcrum disc 106, a check disc 108, and a spring 110. The restriction disc 102, the orifice disc 104, the fulcrum disc 106, the check disc 108, and the spring 110 of the compression bleed valve assembly 62 are configured to be in a stacked arrangement along the axis 35 on the first side 82 of the piston body 60.

The rebound bleed valve assembly 64 comprises, for example, a second set of valve components, wherein the second set of valve components comprises the same components as the first set of valve components. The rebound bleed valve assembly 64 comprises, for example, a restriction disc 102a, an orifice disc 104a, a fulcrum disc 106a, a check disc 108a, and a spring 110a. The restriction disc 102a, the orifice disc 104a, the fulcrum disc 106a, the check disc 108a, and the spring 110a of the rebound bleed valve assembly 64 are configured to be in a stacked arrangement along the axis 35 on the second side 86 of the piston body 60.

Although the compression bleed valve assembly 62 and the rebound bleed valve assembly 64 are shown and described as having the same type and number of components, in some embodiments, the type and number of components in the compression bleed valve assembly 62 may differ from the type and number of components in the rebound bleed valve assembly 64. Additionally, in some embodiments, the one or more of the compression bleed valve assembly 62 and the rebound bleed valve assembly 64 may include additional, fewer, and/or other components without departing from the scope of the invention. Thus, the exact type, number, and/or arrangement of components is not required. The restriction disc 102, the orifice disc 104, and the check disc 108 may be referred to as bleed discs.

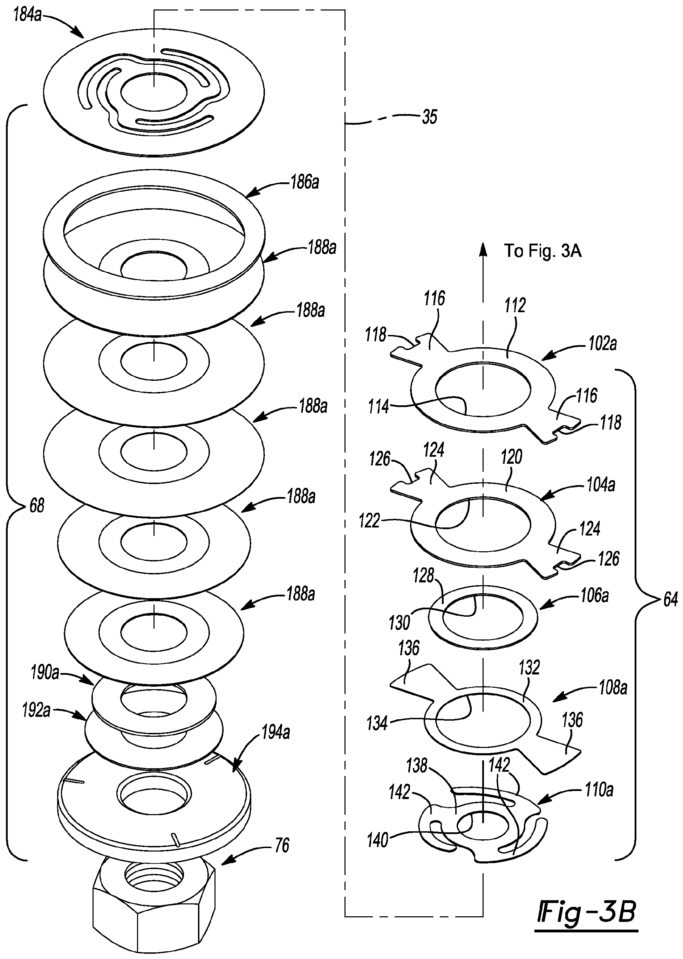

With continued reference to Figures 3A and 3B, each of the restriction disc 102, the orifice disc 104, the fulcrum disc 106, and the check disc 108 are shown and described in greater detail. The restriction disc 102 includes a ring 112 having a center hole 114, and fingers 116 extending radially outward from the ring 112. In some embodiments, the fingers 116 are opposite each other such that the fingers 116 are spaced from each other at generally 180 degrees around the axis 35. In some embodiments, the fingers 116 are spaced from each other at an angle less than or greater than 180 degrees around the axis 35. The restriction disc 102 may be bow-tie shaped. For example, the width of the fingers 116 increases along the fingers 116, such that the fingers 116 get wider as the fingers 116 extend away from the ring 112. Although shown as bow-tie shaped, in some embodiments, the restriction disc 102 may have fingers 116 of other shapes, such as for example only, rectangular or square. Although shown as having two fingers 116, the restriction disc 102 may each include only one, or more than two, fingers 116. The restriction disc 102 is movable from an first or unflexed/undeflected position to a second or flexed/deflected position. In the unflexed/undeflected position, the fingers 116 of the restriction disc 102 are configured to be in contact with the piston body 60.

The restriction disc 102 further includes one or more orifices 118. For example, each finger 116 includes one orifice 118 that extends radially inward from the outer edge of each finger 116 of the restriction disc 102. The orifices 118 are configured to permit fluid flow axially and/or radially relative to the axis 35 of the shock absorber 20. The hydraulic fluid is able to flow through the orifices 118 and the bleed flow passages 100. Each orifice 118 is open in an axial direction and is configured to permit fluid flow axially relative to axis 35 through the restriction disc 102. Additionally, each orifice 118 is open in a radial direction and is configured to permit fluid flow radially relative to axis 35 through the orifices 118 at the outer edges of the fingers 116. In some embodiments, the orifices 118 are configured to remain open to fluid flow regardless of position of the restriction disc 102.

The orifice disc 104 includes a ring 120 having a center hole 122, and fingers 124 extending radially outward from the ring 120. In some embodiments, the fingers 124 are opposite each other such that the fingers 124 are spaced from each other at generally 180 degrees around the axis 35. The orifice disc 104 may be bow-tie shaped. For example, the width of the fingers 124 increases along the fingers 124, such that the fingers 124 get wider as the fingers 124 extend away from the ring 120. Although shown as bow-tie shaped, in some embodiments, the orifice disc 104 may have fingers 124 of other shapes, such as for example only, rectangular or square. Although shown as having two fingers 124, the orifice disc 104 may each include only one, or more than two, fingers 124. In some embodiments, the fingers 124 of the orifice disc 104 have the same size and shape as the fingers 116 of the restriction disc 102.

The orifice disc 104 further includes one or more orifices 126. For example, each finger 124 includes one orifice 126 that extends radially inward from the outer edge of each finger 124 of the orifice disc 104. In some embodiments, the orifices 126 of the orifice disc 104 have the same size and shape as the orifices 118 of the restriction disc 102. In some embodiments, the orifices 126 of the orifice disc 104 have a size and/or shape different from the orifices 118 of the restriction disc 102.

The orifices 126 are configured to permit fluid flow axially and/or radially relative to the axis 35 of the shock absorber 20. The hydraulic fluid is able to flow through the orifices 126 and the bleed flow passages 100. Each orifice 126 is open in an axial direction and is configured to permit fluid flow axially relative to axis 35 through the orifice disc 104. Additionally, each orifice 126 is open in a radial direction and is configured to permit fluid flow radially relative to axis 35 through the orifices 126 at the outer edges of the fingers 124. In some embodiments, the orifices 126 are configured to remain open to fluid flow regardless of position of the orifice disc 104.

The fulcrum disc 106 comprises a ring 128 having a center hole 130. The fulcrum disc 106 is configured to provide a fulcrum point for the check disc 108.

The check disc 108 includes a ring 132 having a center hole 134, and fingers 136 extending radially outward from the ring 132. In some embodiments, the fingers 136 are opposite each other such that the fingers 136 are spaced from each other at generally 180 degrees around the axis 35. The check disc 108 may be bow-tie shaped. For example, the width of the fingers 136 increases along the fingers 136, such that the fingers 136 get wider as the fingers 136 extend away from the ring 132. Although shown as bow-tie shaped, in some embodiments, the check disc 108 may have fingers 136 of other shapes, such as for example only, rectangular or square. Although shown as having two fingers 136, the check disc 108 may each include only one, or more than two, fingers 136. In some embodiments, the fingers 136 of the check disc 108 have the same size and shape as the fingers 116 of the restriction disc 102 and/or the fingers 124 of the orifice disc 104.

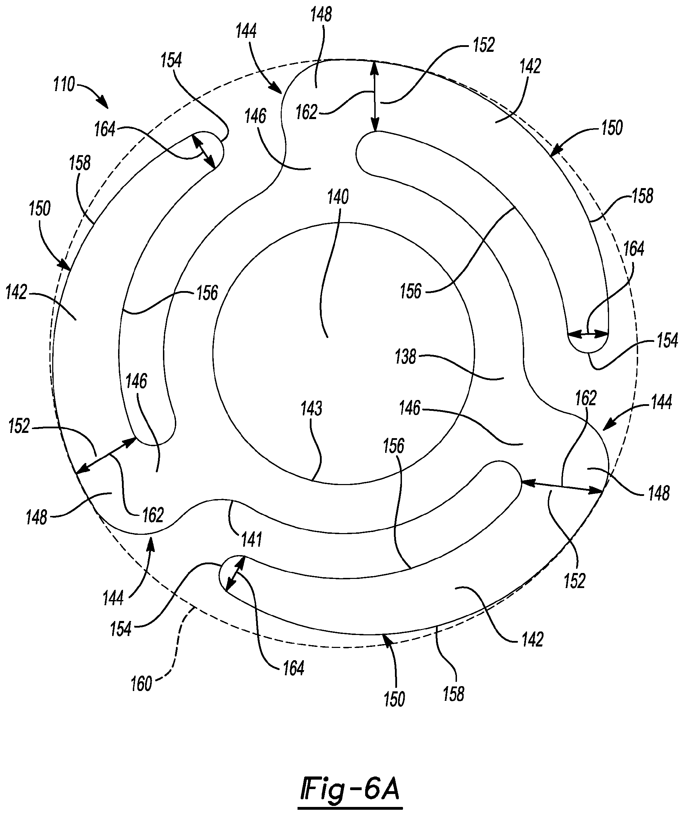

With continued reference to Figures 3A and 3B, 6A-6C and 7, the spring 110 is shown and described in greater detail. The spring 110 includes a ring 138 having a center hole 140. The ring 138 defines an outer diameter 141 (Figure 6A) and an inner diameter 143.

A plurality of arms 142 extend circumferentially around the ring 138. Although shown as having three arms 142, the spring 110 may each include only one, two, or more than three, arms 142. Each of the plurality of arms 142 includes a leg portion 144 extending radially outward from the ring 138. The leg portion 144 extends from a first end 146 proximate to the outer diameter 141 of the ring 138 to a second end 148.

Each of the arms 142 includes a circumferentially extending portion 150 extending circumferentially around the outer diameter 141 of the ring 138. The circumferentially extending portion 150 extends from a base end 152 proximate to the second end 148 of the leg portion 144 and a distal end 154. The circumferentially extending portion 150 defines an inner surface 156 and an outer surface 158. The inner surface 156 of each of the circumferentially extending portions 150 is spaced apart from the outer diameter 141 of the ring 138 defining a gap therebetween. The outer surfaces 158 of each of the circumferentially extending portions 150 cooperate to define an outer diameter 160 of the spring 110.

A first dimension or width 162 of the base end 152 extends between the outer surface 158 and the inner surface 156. The first dimension may be greater than or equal to about 2 millimeters (mm) to less than or equal to about 7 mm (e.g., greater than or equal to about 3 mm, greater than or equal to about 4 mm, greater than or equal to about 5 mm, or greater than or equal to about 6 mm). Similarly, a second dimension or width 164 of the distal end 154 extends between the outer surface 158 and the inner surface 156. The first dimension 162 of the base end 152 is greater than the second dimension 164 of the distal end 154. In this way, the width of the circumferentially extending portion 150 decreases (e.g., is tapered) between the base end 152 and the distal end 154.

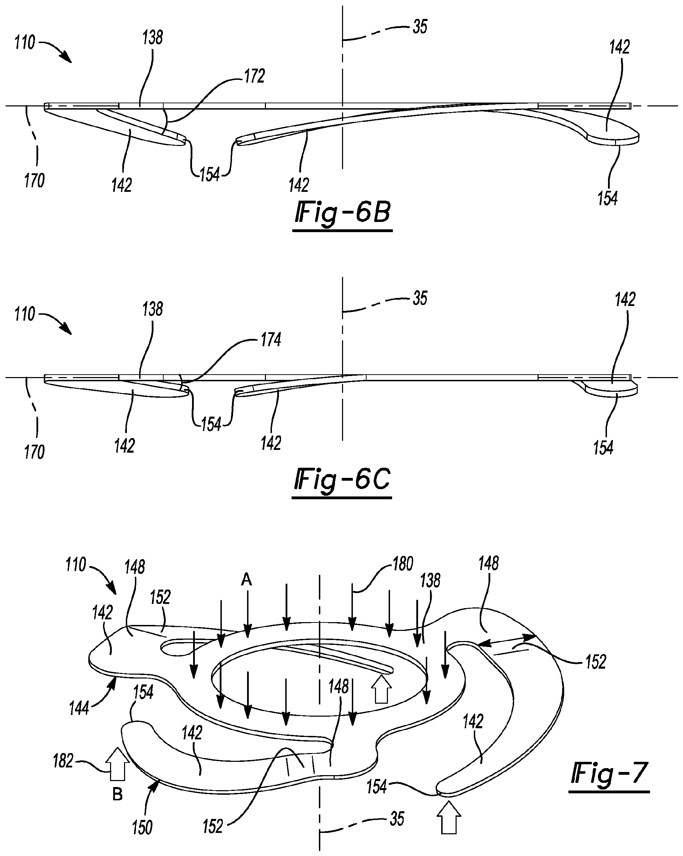

As best shown in Figures 6B and 6C, the ring 138 forms a plane 170. The plurality of arms 142 are bent at an angle with respect to the plane 170. The plurality of arms 142 are movable between a first or expanded position (Figure 6B) and a second or compressed position (Figure 6C). A first angle 172 of the plurality of arms 142 in the first position (Figure 6B) is greater than a second angle 174 of the plurality of arms 142 in the second position (Figure 6C). The plurality of arms 142 are movable between the first and the second positions because cyclic loads are applied to the spring 110 during operation of the compression and rebound valve assemblies. For example, in the second position, as best shown in Figure 7, the spring 110 is clamped (e.g., by the blowoff disc 184) such that a first force A is applied to the ring 138 in a first direction 180 parallel to axis 35 and an opposing force is applied to the distal ends 154 of the plurality of arms 142 in a second direction 182. During cyclic loading of the spring 110, the highest stress is concentrated at the base end 152 of the circumferentially extending portion 150. By tapering the width of the circumferentially extending portion 150, the stress is distributed more evenly throughout the circumferentially extending portion 150. It follows that the spring 110 including a plurality of arms 142 having tapered widths is more durable (i.e., less susceptible to cyclic failure) than a spring including a plurality of arms having a uniform or constant width. The change in dimension (e.g., the change in width) between the base end 152 and the 154 may be tailored to achieve the desired durability characteristics of the spring 110.

The spring 110 is made from an elastically deformable material, such as for example, a metal, a spring steel, a plastic having suitable elastic properties, etc. The spring 110 may be formed by stamping or pressing processes. In some embodiments, the spring 110 may be a wave spring.

With renewed reference to Figures 3A, 3B, 4 and 5, the compression blowoff valve assembly 66 comprises, for example, a third set of valve components, such as a blowoff disc 184, a ring 186, a plurality of valve plates 188, a fulcrum disc 190, a fulcrum support disc 192, and a valve stop 194. The blowoff disc 184, the ring 186, the plurality of valve plates 188, the fulcrum disc 190, the fulcrum support disc 192, and the valve stop 194 of the compression blowoff valve assembly 66 are configured to be in a stacked arrangement along the axis 35 on the first side 82 of the piston body 60, wherein the compression bleed valve assembly 62 is configured to be located between piston body 60 and the compression blowoff valve assembly 66.

The rebound blowoff valve assembly 68 comprises, for example, a fourth set of valve components, wherein the fourth set of valve components comprise the same components as the third set of valve components. The rebound blowoff valve assembly 68 comprises, for example, a blowoff disc 184a, a ring 186a, a plurality of valve plates 188a, a fulcrum disc 190a, a fulcrum support disc 192a, and a valve stop 194a. The blowoff disc 184a, the ring 186a, the plurality of valve plates 188a, the fulcrum disc 190a, a fulcrum support disc 192a, and the valve stop 194a of the of the rebound blowoff valve assembly 68 are configured to be in a stacked arrangement along the axis 35 on the second side 86 of the piston body 60, wherein the rebound bleed valve assembly 64 is configured to be located between piston body 60 and the rebound blowoff valve assembly 68.

Although the compression blowoff valve assembly 66 and the rebound blowoff valve assembly 68 are shown and described as having the same type and number of components, in some embodiments, the type and number of components in the compression blowoff valve assembly 66 may differ from the type and number of components in the rebound blowoff valve assembly 68. Additionally, in some embodiments, the one or more of the compression blowoff valve assembly 66 and the rebound blowoff valve assembly 68 may include additional, fewer, and/or other components without departing from the scope of the invention. Thus, the exact type, number, and/or arrangement of components is not required.

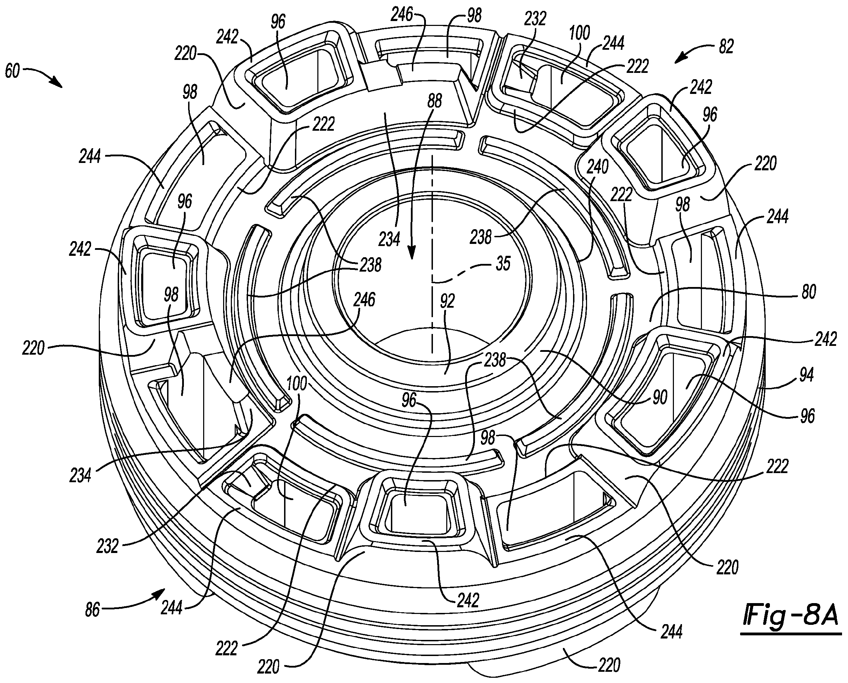

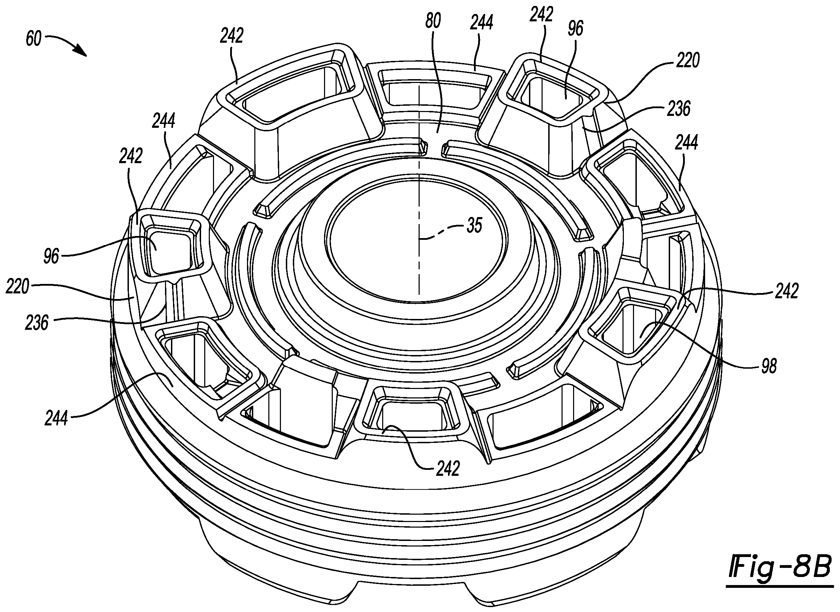

With reference to Figures 4, 5, and 8A-8B additional details of the piston body 60 are shown and described. The piston body 60 includes additional features that are provided on both the first side 82 (Figure 8A) and the second side 86 (Figure 8B) of the piston body 60. The additional features of the piston body 60 include a plurality of first circumferential walls 220 and a plurality of second circumferential walls 222. The piston body 60 may further include one or more additional optional features, such as for example, one or more notches 232 one or more walls 234, one or more ribs 236 (Figure 8B), one or more first supports 238, and one or more second supports 240. As shown in Figures 4, 5, and 8A, these features are identical on the first surface 80 and the second surface 84. Therefore, for brevity and clarity these features will be described only with respect to the first side 82 of the piston body 60. It will be understood that in some embodiments, the features on the first side 82 of the piston body 60 may differ from the features on the second side 86 of the piston body 60. It will also be understood that in some embodiments of the piston body 60 that not all features are required.

The plurality of first circumferential walls 220 located on the first side 82 of the piston body 60 extend from the first surface 80 of the piston body 60 away from the second surface 84. Each first circumferential wall 220 terminates at a distal end with a first circumferential land 242. In some embodiments, the first circumferential lands 242 are parallel to the first surface 80. On the first side 82 of the piston body 60, each compression flow blowoff passage 96 is surrounded by a respective first circumferential wall 220 and first circumferential land 242. During operation of the shock absorber 20, the blowoff disc 184 is configured to be selectively driven into engagement with the first circumferential lands 242. The first circumferential lands 242 provide a first sealing surface configured to selectively seal with the blowoff disc 184.

The plurality of second circumferential walls 222 located on the first side 82 of the piston body 60 extend from the first surface 80 of the piston body 60 away from the second surface 84. Each second circumferential wall 190 terminates at a distal end with a second circumferential land 244. In some embodiments, the second circumferential lands 244 are parallel to the first surface 80. On the first side 82 of the piston body 60, each rebound flow blowoff passage 98 and each bleed flow passage 100 is surrounded by a respective second circumferential wall 222 and second circumferential land 244. The second circumferential lands 244 are longitudinally between the first surface 80 of the piston body 60 and the first circumferential lands 242.

During operation of the shock absorber 20, a portion of a bleed disc, such as for example the restriction disc 102, is configured to be selectively driven into engagement with the second circumferential lands 244. For example, at least portion of the fingers 116 of the restriction disc 102 are configured to be selectively driven into engagement with the second circumferential lands 244. When the fingers 116 are engaged with the second circumferential lands 244 the fingers 116 and the second circumferential lands 244 cooperate to form a seal at the interface between the fingers 116 and the second circumferential lands 244.

The one or more walls 234 of the piston body 60 are located on the first side 82 of the piston body 60 proximate to one or more of the rebound flow blowoff passages 98. For example, one or more walls 234 extend from the first surface 80 of the piston body 60 away from the second surface 84. The one or more walls 234 may be located radially between the center hole 88 and one or more of the rebound flow blowoff passages 98. Each wall 194 terminates at a distal end with a land 246, wherein each land 246 is coplanar with the first circumferential lands 242. During operation of the shock absorber 20, the blowoff disc 184 is configured to be selectively driven into engagement with the lands 246. The wall 234 and the land 246 thereon provide support for the blowoff disc 184 to reduce or eliminate deformation of the blowoff disc.

Having described the components of the piston assembly 32, the position and arrangement of the components of the piston assembly 32 when assembled into the shock absorber 20 are described with reference to Figures 3A, 3B, 4, and 5. In some embodiments, as shown in Figures 3A, 3B, 4, and 5, the assembled arrangement of the components of the compression bleed valve assembly 62 is the same as the assembled arrangement of the components of the rebound bleed valve assembly 64. Similarly, the assembled arrangement of components of the compression blowoff valve assembly 66 is the same as the assembled arrangement of the components of the rebound blowoff valve assembly 68. That is, the arrangement of components on the first side 82 of the piston body 60 is mirrored on the second side 86 of the piston body 60. Therefore, it will be understood that the below description with respect to the arrangement of the components of the compression bleed valve assembly 62 and the compression blowoff valve assembly 66 on the first side 82 of the piston body 60 is the same for the rebound bleed valve assembly 64 and the rebound blowoff valve assembly 68 on the second side 86 of the piston body 60. It will be understood that this arrangement of components is exemplary and in some embodiments the number, type, and arrangement of components may differ without departing from the scope of the invention.

When assembled into the shock absorber 20, the restriction disc 102 is proximate to the piston body 60, the hub 90 is received in the center hole 114 of the restriction disc 102, and the fingers 116 selectively cover the bleed flow passages 100. For example, the fingers 116 are circumferentially aligned with, and extend radially beyond, the bleed flow passages 100.

The orifice disc 104 is in contact with the restriction disc 102, wherein the restriction disc 102 is located between the piston body 60 and the orifice disc 104. Additionally, when assembled into the shock absorber 20, the hub 90 is received in the center hole 122 of the orifice disc 104 and the fingers 124 of the orifice disc 104 overlap or cover the fingers 116 of the restriction disc 102. Additionally, when assembled into the shock absorber 20, the orifices 126 of the orifice disc 104 are aligned with the orifices 118 of the restriction disc 102. The orifices 126 of the orifice disc 104 and the orifices 118 of the restriction disc 102 cooperate to define a radial open area and an axial open area (parallel to axis 35). The radial open area provides a continuously open fluid flow path to allow for a radial open bleed flow.

The fulcrum disc 106 is in contact with the orifice disc 104, wherein the restriction disc 102 and the orifice disc 104 are located between the piston body 60 and the fulcrum disc 106. Additionally, when assembled into the shock absorber 20, the hub 90 is received in the center hole 130 of the fulcrum disc 106. The fulcrum disc 106 provides a fulcrum point or bending point for the check disc 108.

The check disc 108 is in contact with the fulcrum disc 106, wherein the restriction disc 102, the orifice disc 104, and the fulcrum disc 106 are located between the piston body 60 and the check disc 108. Additionally, when assembled into the shock absorber 20, the hub 90 is received in the center hole 134 of the check disc 108. Additionally, when assembled into the shock absorber 20, the fingers 136 of the check disc 108 are disposed above one or more of the fingers 124 of the orifice disc 104 and the fingers 116 of the restriction disc 102.

The check disc 108 is configured to selectively be in a first position and a second position. When the check disc 108 is in the first position, the fingers 136 of the check disc 108 are above the fingers 124 of the orifice disc 104 and may be separated a distance from the orifice disc 108 that is equal to the thickness of the fulcrum disc 106. Additionally, when the check disc 108 is in the first position, the axial open area and the radial open area are open to the flow of fluid. When the check disc 108 is in the second position, the fingers 136 of the check disc 108 contact the fingers 124 of the orifice disc 104 and cover the orifices 126 of the orifice disc 104 and the orifices 118 of the restriction disc 102. Additionally, when the check disc 108 is in the second position, the axial open area is closed to the flow of fluid and only the radial open area is open to the flow of fluid. With reference to Figure 4, the check disc 108 includes a first surface selectively engageable with an opposing surface of the orifice disc 104 to close the axial open area.

When assembled into the shock absorber 20, the ring 138 of the spring 110 is in contact with the hub face 92 of the hub 90. Alternately, it is contemplated that the ring 138 of the spring 110 is slightly spaced apart from the hub face 92 of the hub 90, for example by a spacer disc (not shown) disposed between the ring 138 and the hub 90.

The spring 110 is oriented such that the arms 142 of spring 110 abut the check disc 108 and serve to exert a force on the check disc 108 (e.g., when the spring 110 is in the second position (Figure 6C)). This force exerted by the plurality of arms 142 on the check disc 108 pushes the stacked check disc 108, fulcrum disc 106, orifice disc 104, and restriction disc 102 towards the piston body. While the plurality of arms 142 of the spring 110 contact the check disc 108 in the configuration of Figures 3A-5, in other configurations the compression bleed valve assembly 62 may free of a check disc and/or a fulcrum disc 106. It is contemplated that the plurality of arms 142 of the spring 110 may contact and exert a force on any of the bleed discs of the bleed valve assembly 62 during operation of the shock absorber 20. For example, it is contemplated that the plurality of arms 142 of the spring contact the orifice disc 104 and/or the restriction disc 102.

The outer diameter 160 of the spring 110 is smaller than an inner diameter of the piston body 60 such that the arms 142 of the spring 110 are positioned radially inward from the first and second circumferential walls 220, 222. The configuration of the circumferentially extending arms 142 of the spring 110 enables more compact packaging of the compression and/or rebound assemblies 62, 64 as compared to a spring having radially extending arms.

The blowoff disc 184 is in contact with the spring 110 of the adjacent compression bleed valve assembly 62 or rebound bleed valve assembly 64. The blowoff disc 184 is also in contact with the first circumferential lands 242 of the piston body 60. In this way, the compression blowoff valve assembly 66 is in contact with at least a part of the compression bleed valve assembly 62 and the rebound blowoff valve assembly 68 is in contact with at least a part of the rebound bleed valve assembly 64.

During operation of the shock absorber 20, the piston rod 34 moves between a compression stroke and a rebound stroke. During the compression stroke, the fluid in the second working chamber 46 is at a higher pressure than the fluid in the first working chamber 44. Accordingly, when the compression stroke begins, fluid flows from the second working chamber 46 to the first working chamber 44 via the rebound reed valve assembly 64, passages (e.g., compression flow blowoff passages 96 and bleed flow passages 100) in the piston body 60, compression reed valve assembly 62, and the compression blowoff valve assembly 66.

When the speed of piston assembly 32 increases, fluid pressure within the second working chamber 46 will increase and the fluid pressure force is applied to the spring 110a of the rebound bleed valve assembly 64 to compresses the spring 110a into the second position (see, e.g., Figure 6C)). The plurality of arms 142 of the spring 110a apply a force on the check disc 108a thereby urging the check disc 108a towards the second surface 84 of the piston body 60. In other words, the check disc 108a of the rebound bleed valve assembly 64 deflects axially upward toward the orifice disc 104a of the rebound valve assembly 64. By applying a force on the check disc 108a, the check disc 108a cooperates with the bleed valve discs (e.g., the orifice disc 104a and restriction disc 102a) to at least partially restrict fluid flow through the bleed flow passages 100 on the second side 86 of the piston body 60. When the speed of piston assembly 32 increases further, fluid pressure within the plurality of compression flow blowoff passages 96 increases and the fluid pressure force applied to the blowoff disc 184 of the compression blowoff valve assembly 66 overcomes the biasing load of the ring 186 and the valve plates 188 of the compression blowoff valve assembly 66. The blowoff disc 184 of the compression blowoff valve assembly 66 moves axially to open the plurality of compression flow blowoff passages 96, thereby permitting fluid to flow into the first working chamber 44. When the blowoff disc 184 of the compression blowoff valve assembly 66 moves to open the compression flow blowoff passages 96, the spring 110 of the compression bleed valve assembly 64 is unloaded (i.e., the spring 110 is in the first position (see, e.g., Figure 6B)).

During the rebound stroke, the fluid in the first working chamber 44 is at a higher pressure than the fluid in the second working chamber 46. Accordingly, when the rebound stroke begins, fluid flows from the first working chamber 44 to the second working chamber 46 via the compression reed valve assembly 62, passages (e.g., rebound flow blowoff passages 98 and bleed flow passages 100) in the piston body 60, the rebound valve assembly 64, and the rebound blowoff assembly 68.

When the speed of piston assembly 32 increases, fluid pressure within the first working chamber 44 will increase and the fluid pressure force applies to the spring 110 of the compression bleed valve assembly 62 to compress the spring 110 into the second position (see, e.g., Figure 6C)). The plurality of arms 142 of the spring 110 apply a force on the check disc 108 thereby urging the check disc 108 towards the first surface 82 of the piston body 60. In other words, the check disc 108 of the compression bleed valve assembly 62 deflects axially downward toward the orifice disc 104 of the compression valve assembly 62. By applying a force on the check disc 108, the check disc 108 cooperates with the bleed valve discs (e.g., the orifice disc 104 and restriction disc 102) to at least partially restrict fluid flow through the bleed flow passages 100 on the first side 80 of the piston body 60.When the speed of piston assembly 32 increases further, fluid pressure within the plurality of rebound flow blowoff passages 98 increases and the fluid pressure force applied to the blowoff disc 184a of the rebound blowoff valve assembly 68 overcomes the biasing load of the ring 186a and the valve plates 188a of the rebound blowoff valve assembly 68. The blowoff disc 184a of the rebound blowoff valve assembly 68 moves axially to open the plurality of rebound flow blowoff passages 98, thereby permitting fluid to flow into the second working chamber 46. When the blowoff disc 184a of the rebound blowoff valve assembly 68 moves to open the rebound flow blowoff passages 98, the spring 110 of the rebound bleed valve assembly 64 is unloaded (i.e., the spring 110 is in the first position (see, e.g., Figure 6B)).

The tuning of the shock absorber 20 can be controlled by controlling the size and number of compression flow blowoff passages 96, rebound flow blowoff passages 98, and bleed flow passages 100, the angle and/or size of the notches 232 in the piston body 60, the design, type, number, and/or arrangement of the components of the compression bleed valve assembly 62, the rebound bleed valve assembly 64, the compression blowoff valve assembly 66, and the rebound blowoff valve assembly 68, as well as other design features for shock absorber 20. Additionally, the tuning of the bleed fluid flow through the bleed flow passages 100 can be controlled by controlling the size and number of bleed flow passages 100, the size and number of orifices 118, 126 in the restriction disc 102 and the orifice disc 104, respectively, and/or by controlling the thicknesses the restriction disc 102, the orifice disc 104, the fulcrum disc 106, and/or the check disc 108. As discussed above, the durability of the spring 110, and therefore the shock absorber 20, can be controlled by controlling the size and change in width of the plurality of arms 142 of the spring 110.

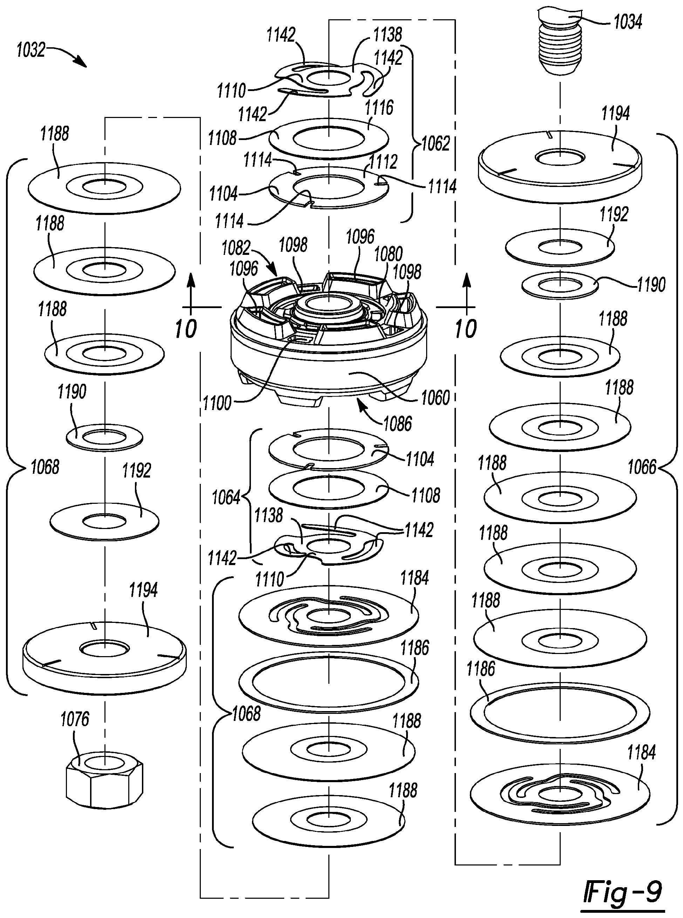

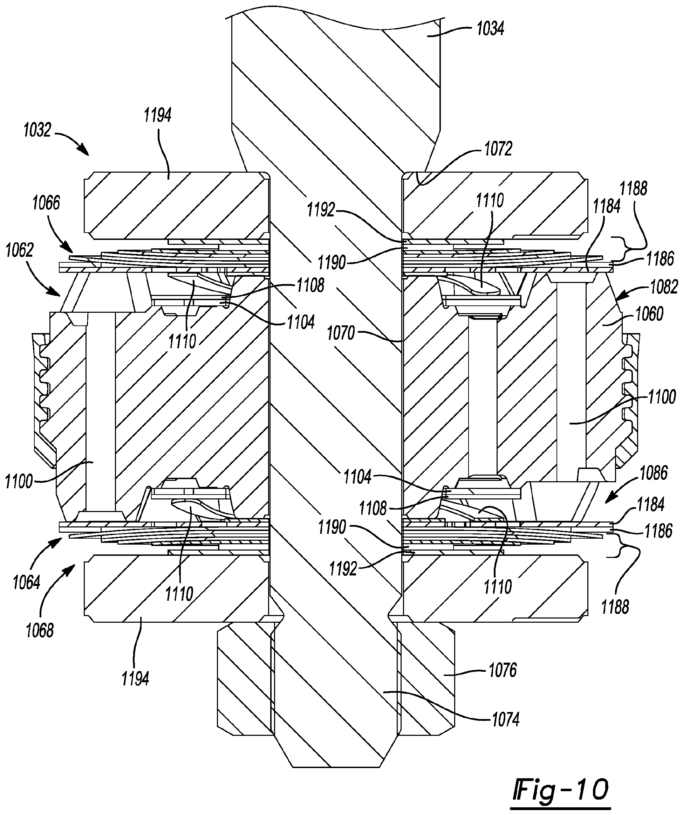

Although shown in cooperation with the piston assembly 32 described and shown herein, the spring 110 may be used with other types of piston assemblies without departing from the scope of the invention. Referring now to Figures 9 and 10, an alternative embodiment of a piston assembly 1032 is described. The piston assembly 1032 may be used in shock absorber 20. The piston assembly 1032 may be the same as or similar to the piston assembly 32 of Figures 2-8 except as otherwise described below.

The piston assembly 1032 comprises a piston body 1060 that is attached to the piston rod 1034, a compression bleed valve assembly 1062, a rebound bleed valve assembly 1064, a compression blowoff valve assembly 1066, and a rebound blowoff valve assembly 1068. The piston body 1060 is located on a reduced diameter section 1070 (Figure 10) of piston rod 1034 with the compression bleed valve assembly 1062 and the compression blowoff valve assembly 1066 being located longitudinally between the piston body 1060 and a shoulder 1072 of the piston rod 1034 and with the rebound bleed valve assembly 1064 and the rebound blowoff valve assembly 1068 being located longitudinally between the piston body 1060 and a threaded end 1074 of the piston rod 1034. A retaining nut 1076 cooperates with the threaded end 1074 of the piston rod 1034 to secure the compression blowoff valve assembly 1066, the compression bleed valve assembly 1062, the piston body 1060, the rebound bleed valve assembly 1064, and the rebound blowoff valve assembly 1068 to the piston rod 1034.

The piston body 1060 includes a first surface 1080 on a first side 1082 of the piston body 1060 and a second surface 1084 on a second side 1086 of the piston body 1060.The piston body 1060 defines a plurality of compression flow blowoff passages 1096, a plurality of rebound flow blowoff passages 1098, and a plurality of bleed flow passages 1100.

The compression bleed valve assembly 1062 and the rebound bleed valve assembly 1064 each comprise, for example, a first set of valve components, such as an orifice disc 1104, a check disc 1108, and a spring 1110. The orifice disc 1104, the check disc 1108, and the spring 1110 of the compression bleed valve assembly 1062 and the rebound bleed valve assembly 1064 are configured to be in a stacked arrangement along the axis 35 on the respective first side 1082 and second side 1086 of the piston body 1060.

The orifice disc 1104 includes a ring 1112 and one or more orifices 1114. The check disc includes a ring 1116. In the embodiment of Figures 9 and 10, the orifice disc 1104 and the check disc 1108 are free of fingers. The spring 1110 is the same as spring 110 of Figures 3-8 and includes a ring 1138 and a plurality of circumferentially extending arms 1142.

The compression blowoff valve assembly 1066 and the rebound blowoff valve assembly 1068 comprise, for example, a second set of valve components, such as a blowoff disc 1184, a ring 1186, a plurality of valve plates 1188, a fulcrum disc 1190, a fulcrum support disc 1192, and a valve stop 1194. The blowoff disc 1184, the ring 1186, the plurality of valve plates 1188, the fulcrum disc 1190, the fulcrum support disc 1192, and the valve stop 1194 of the compression blowoff valve assembly 1066 are configured to be in a stacked arrangement along the axis 35 on the first side 1082 of the piston body 1060, wherein the compression bleed valve assembly 1062 is configured to be located between piston body 1060 and the compression blowoff valve assembly 1066. The blowoff disc 1184, the ring 1186, the plurality of valve plates 1188, the fulcrum disc 1190, the fulcrum support disc 1192, and the valve stop 1194 of the of the rebound blowoff valve assembly 1068 are configured to be in a stacked arrangement along the axis 35 on the second side 1086 of the piston body 60, wherein the rebound bleed valve assembly 1064 is configured to be located between piston body 1060 and the rebound blowoff valve assembly 1068.

The foregoing description of the embodiments has been provided for purposes of illustration and description. It is not intended to be exhaustive or to limit the invention. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the invention, and all such modifications are intended to be included within the scope of the invention.

## Claims

1. A shock absorber for a vehicle comprising:
a pressure tube defining a fluid chamber;
a piston slidably positioned within the fluid chamber and defining a first working chamber and a second working chamber, the piston including a passage extending therethrough; and
a valve assembly selectively opening and closing the passage, the valve assembly including:
a spring comprising:
a ring defining a center aperture; and
a plurality of arms extending around the ring, each of the plurality of arms including a radially extending leg, a base end positioned proximate to the leg, and a distal end, each of the plurality of arms extending circumferentially outward from the base end, wherein a first dimension of the base end is greater than a second dimension of the distal end, and
a disc at least partially disposed between the piston and the spring.

2. The shock absorber of claim 1, wherein each of the plurality of arms is bent at an angle with respect to a plane of the ring.

3. The shock absorber of claim 1, wherein the spring is movable between a first position and a second position, and wherein in the first position, the spring is compressed and each of the plurality of arms is positioned at a first angle with respect to a plane of the ring.

4. The shock absorber of claim 3, wherein in the second position, each of the plurality of arms is positioned at a second angle with respect to the plane of the ring, wherein the second angle is greater than the first angle.

5. The shock absorber of claim 1, wherein each of the plurality of arms includes an inner surface that is spaced apart from an outer diameter of the ring defining a gap therebetween.

6. The shock absorber of claim 1, wherein each of the plurality of arms includes an outer surface, wherein the outer surfaces cooperate to define an outer diameter of the spring.

7. The shock absorber of claim 6, wherein the piston includes a plurality of circumferential walls, and the plurality of arms of the spring are positioned radially inward from the plurality of circumferential walls.

8. The shock absorber of claim 1, wherein the first dimension of the base is greater than or equal to about 2 millimeters to less than or equal to about 7 millimeters.

9. The shock absorber of claim 1, wherein the plurality of arms includes a first arm, a second arm, and a third arm.

10. The shock absorber of claim 1, wherein the piston includes a first surface and a hub extending axially outward from the first surface to an annular end, wherein the disc circumscribes the hub, and wherein the ring of the spring contacts the annular end of the hub.

11. The shock absorber of claim 1, wherein at least a portion of each of the plurality of arms of the spring are adapted to contact and exert a force on the disc and urge the disc toward a first surface of the piston to restrict fluid flow through the passage.

12. The shock absorber of claim 1, wherein at least a portion of a piston rod is received in the central aperture of the spring.

13. The shock absorber of claim 1, wherein the spring is made of an elastically deformable material.

14. The shock absorber of claim 13, wherein the spring is made of a spring steel.
